(19) Europäisches Patentamt / European Patent Office / Office européen des brevets

(11) **EP 2 682 452 A1**

(12) **EUROPEAN PATENT APPLICATION**
published in accordance with Art. 153(4) EPC

(43) Date of publication:
**08.01.2014 Bulletin 2014/02**

(21) Application number: **12751761.3**

(22) Date of filing: **29.02.2012**

(51) Int Cl.:
*C11B 3/10* (2006.01)          *A23D 9/04* (2006.01)
*A23L 1/015* (2006.01)          *A23L 3/3463* (2006.01)
*B01J 20/04* (2006.01)          *C01F 5/00* (2006.01)
*C11B 5/00* (2006.01)          *C11B 13/00* (2006.01)

(86) International application number:
**PCT/JP2012/055063**

(87) International publication number:
**WO 2012/118116 (07.09.2012 Gazette 2012/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.03.2011 JP 2011044872**

(71) Applicants:
• **Kabushiki Kaisha Yamajun
  Shizuoka 420-0065 (JP)**
• **Kyowa Chemical Industry Co., Ltd
  Takamatsu-shi, Kagawa 761-0113 (JP)**

(72) Inventors:
• **YAMASHITA, Keiichiro
  Shizuoka-shi
  Shizuoka 420-0065 (JP)**
• **FUJISAWA, Seiji
  4035, Hayashida-cho,
  Sakaide-shi
  Kagawa 7620012 (JP)**

(74) Representative: **TBK
  Bavariaring 4-6
  80336 München (DE)**

(54) **ASSEMBLY COMPRISING EDIBLE-OIL CLEANING AGENT AND CONTAINER, AND PURIFICATION METHOD OF EDIBLE-OIL USING SAME**

(57)     [Problem] Provided are a combined product comprising an edible-oil purifying agent and a container, and a purification method of edible oil using the same. [Solution] The combined product comprises the edible-oil purifying agent and the container for enclosing the edible-oil purifying agent, the container including a non-woven fabric bag and a stainless steel casing, which accommodates the at least one bag, which has many pores, and which is provided with a stainless steel handle. The combined product is used by being placed into and taken out from the edible oil in an oil bath. In use, the enclosed edible-oil purifying agent is contacted with the heated edible oil in the oil bath.

[fig.06]

EP 2 682 452 A1

**Description**

Technical Field

The present invention relates to a combined product of an edible-oil purifying agent and a container, and an edible-oil purification method using the combined product. More particularly, the present invention relates to not only a combined product comprising a container and an edible-oil purifying agent that can ensure a longer lifetime of edible oil used, e.g., in a fryer for business purposed and as frying oil in homes, i.e., an edible-oil treating agent that is useful as a life-prolonging agent or a degradation preventive agent for edible oil, but also a purification method using the combined product. The present invention provides an edible-oil purifying agent made of magnesium oxide particles, which can develop the action of suppressing degradation of the edible oil when the edible oil is heated under the presence of the edible-oil purifying agent made of the magnesium oxide particles, and which enables fried foods to be cooked while maintaining a satisfactory state of the frying oil for a longer period than that obtained in the past. In addition, by employing the present invention, food materials can be cooked in an improved state for a longer period, and an amount of oil to be periodically discarded or exchanged is reduced. Thus, the present invention can be usefully utilized in a variety of processed food fields including, for example, a field of frying foods with the edible oil.

Background Art

Hitherto, edible oil used for cooking fried foods in homes, food-service industries, and food manufacturing industries has been usually periodically discarded or exchanged because degeneration or degradation of the edible oil progresses each time the edible oil is used for the cooking. Oily matters (fats and oils) used for cooking *tempura* and fry gradually degrade with the lapse of time in use, thus causing a problem that fried food materials are cooked in an unsatisfactory state. For example, crispy or crunchy texture of the fried foods is gradually lost. Moreover, the oily matters turn black, generate nasty smell, and become excessively viscous. Those problems are known in the past, but they are not completely overcome up to now. Meanwhile, a tendency to regenerate and reuse the waste edible oil has spread recently from the viewpoint of reducing environmental loads attributable to discarding of the waste oil and suppressing the cooking cost.

Regarding the regeneration of the edible oil, there is known an edible-oil purifying composition of adsorbent type, which is made of a mixture of a solid basic substance containing magnesium and acid earth, and which is used by being added to degraded edible oil, stirring the oil added with the composition, and filtering the oil (Patent Document 1). Moreover, as a deacidificating agent for use in an edible-oil regenerating method of regenerating edible oil by mixing the deacidificating agent into degraded edible oil, stirring the degraded edible oil to make impurities in the oil, such as foreign substances, moisture, and fatty acids, adsorbed to the deacidificating agent, and separating the adsorbed impurities, there is known an edible-oil deacidificating agent selected from a group consisting of magnesium oxide, calcium oxide, magnesium carbonate, calcium carbonate, calcium silicate, magnesium silicate, calcium hydroxide, magnesium hydroxide, aluminum hydroxide, synthesized magnesium phyllosilicate, silica, magnesia, silicon dioxide, and activated white earth, the deacidificating agent being granulated to particle size of 50 to 200 $\mu$m (Patent Document 2).

Although there are already known refining techniques to degum, deacidificate, discolor, and deodorize crude oily matters, it has been difficult to apply those known refining techniques to regeneration and refinement of used edible oily matters. As a technique for overcoming such a drawback, there is developed a method of regenerating used edible oily matters, the method comprising the steps of contacting the used edible oily matters, heated up to 50 to 180 °C, with a treatment agent A capable of selectively adsorbing colored substances (i.e., a treatment agent obtained by treating clay of $SiO_2$ and $Al_2O_3$ with an organic acid) for a certain time, contacting the used edible oily matters with a treatment agent B capable of selectively adsorbing free fatty acids or converting the free fatty acids to compounds, which are hard to dissolve in oily matters, through reaction with the free fatty acids (i.e., a treatment agent containing, e.g., magnesium oxide carried on inorganic porous fine particles) for a certain time, and separating the treatment agents A and B and reaction products from each other for removal (Patent Document 3).

As an agent for regenerating degraded edible-oil, the agent being able to reduce an acid value of the degraded oil and to adsorb (discolor) dye components with addition of a smaller amount of the agent to the degraded edible oil, there is developed a degraded edible-oil regenerating agent prepared by mixing silicon dioxide in grade equivalent to a food additive and calcium hydroxide in grade equivalent to a food additive in a dry state, the regenerating agent having a total specific surface area of not less than 350 m$^2$/g, including fine pores formed in distribution with a maximum being in a pore diameter range of 4 to 50 nm, and having an external surface area that is not less than 80 % of the total specific surface area when calculated in accordance with the $V_l$-t method (Patent Document 4).

Any of the above-described techniques utilizes steps of mixing, stirring, and filtering to carry out the process of regenerating the used edible oily matters. Apart from those techniques, there is also developed a method of preparing a filter and utilizing only a step of filtering. In more detail, there is proposed a re-circulatory treatment apparatus for regenerating used edible oily matters by employing a regeneration filter for the used edible oily matters, the regeneration filter being prepared by forming, into a filling filter or rolled filter mixed with paper, a mixture of a treatment agent A capable of selectively adsorbing free fatty acids, but being hardly soluble in the oily matters (i.e., powder containing magnesium oxide, calcium oxide, magnesium hydroxide, and calcium hydroxide that are carried on silicon oxide) and a treatment agent B capable of selectively adsorbing colored substances (i.e., powder of silicon oxide, activated charcoal, and activated white earth), the treatment apparatus comprising a suction tube for taking out the used oily matters in a fryer tank, a regenerator constituted by the regeneration filter and a container accommodating the regeneration filter, a feed pump or a suction pump, and a return tube for returning the regenerated oil to the fryer tank (Patent Document 5).

The above-described edible-oil regeneration techniques need the steps of mixing, stirring, and filtering, or require the use of the special  absorbents, synthesis of the absorbents having special compositions, or realization of combination of the absorbents having different characteristics. Thus, practical use of those techniques necessitates complicated steps and technical development for synthesis of the absorbents that are not easily available.

Prior Art Documents

Patent Documents

Patent Document 1: Japanese Patent Laid-Open Publication No. H2-307526
Patent Document 2: Japanese Patent Laid-Open Publication No. 2001-335793
Patent Document 3: Japanese Patent Laid-Open Publication No. 2006-241245
Patent Document 4: Japanese Patent Laid-Open Publication No. 2007-143525
Patent Document 5: Japanese Patent Laid-Open Publication No. 2006-334221

Summary of the Invention

Problems to be Solved by the Invention

In current situations where many food industries employing edible oil are facing hardship in management aspect with an increase in price of the edible oil in recent years, it is demanded to suppress oxidization of the edible oil and to make the edible oil usable for a longer time, thereby not only cutting the purchase cost of the edible oil and discarding the waste oil, but also satisfying needs of the edible oil, which are increasing year by year, and further demanded to reduce destruction of nature due to production of crop plants for the edible oil and harmful  loads applied to environments with waste oil. A simple and most practical solution to the above-mentioned problem is to regenerate the used edible oil. The action necessary for a regenerating agent employed to regenerate the used edible oil is mainly divided into two types. One is a deacidificating action to convert free fatty acids, generated due to degradation of the oil, to compounds, which are hard to dissolve in the oily matters, thereby removing the free fatty acids. The other is a discoloring action to adsorb and remove colored substances from the degraded edible oil, which has turned brown, and to return the color of the degraded edible oil to a color close to that of fresh oil. For such regeneration of the edible oil, it has hitherto been proposed to use, as a deacidificating agent, composite compositions made of plural substances selected from among calcium oxide, calcium hydroxide, calcium silicate, magnesium oxide, magnesium hydroxide, magnesium silicate, etc., and to use, as a discoloring agent, silicon oxide, acid earth, activated white earth, aluminum silicate, aluminum hydroxide, activated charcoal, and so on (Patent Documents 1 to 5).

The reaction between the deacidificating agent and the free fatty acids in the edible oil progresses as an action between an acid and a solid base. In that case, it is expected that as the specific surface area of the deacidificating agent increases, a contact area of the deacidificating agent with the fatty acids increases, thus improving a deacidification rate and deacidification power. Therefore, Patent Documents 3 and 5 propose techniques to increase the specific surface area of the deacidificating agent by immersing an inorganic porous substance having a large specific surface area, such as silicon oxide, in an aqueous solution containing magnesium or an aqueous solution  containing calcium, and firing the inorganic porous substance after drying. However, those techniques are disadvantageous in that because the deacidificating agent synthesized by the above-mentioned method contains a smaller amount of solid base in the entire deacidificating agent, the theoretical deacidification capacity per unit weight is reduced. Furthermore, there is known the edible-oil deacidificating agent that contains acid earth and develops the effect by specifically setting the particle size to 50 to 200 $\mu$m (Patent Document 2). However, that deacidificating agent is difficulty to use in practice because of the necessity of efficiently separating fine particles from the edible oil. In addition, the necessity of synthesizing the substances having special compositions and of employing plural treatment agents to practice the purifying agent for the edible oil has been a high hurdle in carrying out the regeneration of the edible oil.

In the situations discussed above, the inventors have made the present invention by conducting intensive researches and studies with intent to not only overcome the known disadvantages that edible oil degrades by being oxidized in a process of heating the edible oil to high temperature of about 150 to 200 °C and cooking fried foods, thus deteriorating quality and taste of the fried foods, such as deep-fried foods and *tempura,* and that consumption of the edible oil increases, but also to treat the edible oil through simple steps without using a special treatment agent.

An object of the present invention is to provide a superior edible-oil purifying agent by employing magnesium oxide particles alone, which are in grade equivalent to a food additive. Another object of the present invention is to prevent a loss of the edible oil due to oxidization  and degradation when the edible oil is used at about 150 to 200 °C, to reduce the consumption of the edible oil, and to hold, in manufacturing processed foods, such as fried foods, with the edible oil, the edible oil in a state usable for a longer time without reducing quality of the manufactured products. Still another object of the present invention is to provide a purifying agent capable of purifying the degraded edible oil in a temperature range of 50 to 200 °C, particularly preferably 150 to 200 °C.

Still another object of the present invention is to remove high-temperature oxides and polymers of components in the edible oil by employing the edible oil in a state heated under the presence of the edible-oil purifying agent, thus enabling the fried foods to be manufactured while maintaining the edible oil in a satisfactory state as frying oil for a longer period than in the past, to improve finished conditions after cooking of food materials, and to reduce an amount of the edible oil to be periodically discarded or exchanged.

In other words, an object of the present invention is to provide a novel edible-oil treating agent that has the function of preventing degradation of the edible oil or prolonging the lifetime of the edible oil in treatment of the edible oil in a fryer used for business purpose and frying oil used in homes. Another object of the present invention is to provide an edible-oil purifying agent, which is contained in a container and which can be easily brought into contact with the edible oil.

Means for Solving the Problems

The inventors have accomplished the present invention by newly finding a purifying agent capable of preventing accumulation of decomposition products generated from the edible oil due to high-temperature  oxidization, and capable of making the edible oil usable for a longer period, i.e., a novel edible-oil treating agent that has the function of preventing degradation of the edible oil or prolonging the lifetime of the edible oil. Stated in another way, the present invention can not only regenerate the edible oil by treating the edible oil with the purifying agent of the present invention after use of the edible oil as in the past, but also prevent degradation of the edible oil and make the edible oil usable for a longer period by a simple usage such as placing the magnesium oxide particles into the edible oil from the start of use thereof. In the present invention, since the magnesium oxide particles are in grade equivalent to a food additive, they are easily available and are free from adverse influences on health. Moreover, an amount of the waste oil is reduced to lessen a risk of environmental pollution, and a total cost can be reduced.

According to the present invention, the treatment of the edible oil can be readily performed by filling and enclosing the magnesium oxide particles in a container made of a material having oil resistance and oil permeability, or by filling the magnesium oxide particles in a non-woven fabric bag made of a material having oil resistance and oil permeability, and accommodating the non-woven fabric bag in container, e.g., a stainless steel container, which has many fine pores and which is oil-resistant, and by placing or contacting the former or latter container into or with the edible oil in a heated state.

The present invention resides in a combined product that is used by being placed into and taken out from the edible oil in an oil bath, and that is used in a state of an enclosed purifying agent being contacted with the heated edible oil in the oil bath, as described in the  following (1) to (5). The present invention also resides in a method of purifying degraded edible oil in a temperature range of 150 to 200 °C, as described in the following (6) to (10).

(1) A combined product comprises an edible-oil purifying agent and a container for enclosing the purifying agent and is used in a state of the edible-oil purifying agent being put in the container, wherein the purifying agent is made of magnesium oxide particles that are in an aggregate form and that are in grade equivalent to a food additive, and the container includes a non-woven fabric bag and a stainless steel casing, the non-woven fabric bag being made of a material having heat resistance, oil resistance, and oil permeability and allowing the container to be placed at a position adjacent to a heater where edible oil is at highest temperature in an oil bath and convection occurs due to decomposition reaction and heat, the stainless steel casing accommodating the at least one bag and having many pores, the combined product being used by being placed into and taken out from the edible oil in the oil bath while, in use, the enclosed purifying agent is contacted with the heated edible oil in the oil bath.

(2) The combined product of the edible-oil purifying agent and the container for enclosing the purifying agent as defined in above (1), wherein the container includes the non-woven fabric bag and the stainless steel casing, which accommodates the at least one bag, which has many pores, and which is provided with a stainless steel handle.

(3) The combined product of the edible-oil purifying agent and the container for enclosing the purifying agent as defined in above (1), wherein the stainless steel casing is a container formed of a stainless steel plate having a number 1000 or more of pores, each having a diameter of 1.5 mm, in a 10 cm square.

(4) The combined product of the edible-oil purifying agent and the container for enclosing the purifying agent as defined in above (1), wherein, in use, magnesium oxide is contacted with the edible oil at a rate of 0.8 g to 4.0 g of the magnesium oxide in terms of (MgO) with respect to 1.0 L of the edible oil.

(5) The combined product of the edible-oil purifying agent and the container for enclosing the purifying agent as defined in above (1), wherein the edible oil is one or more selected from among soybean oil, olive oil, rapeseed oil, sesame oil, sunflower oil, safflower oil, corn oil, peanut oil, rice oil, and linseed oil.

(6) A method of purifying degraded edible oil in a temperature range of 150 to 200 °C, the method being practiced using a combined product, which comprises an edible-oil purifying agent made of magnesium oxide particles that are in an aggregate form and that are in grade equivalent to a food additive, and a container for enclosing the purifying agent, the container including a non-woven fabric bag made of a material having oil resistance and oil permeability, and a stainless steel casing, which accommodates the at least one bag, which is made of a material having heat resistance, and which has many pores, the method including the step of placing the combined product, which is in a state of the purifying agent being enclosed in the container, at a position adjacent to a heater where the edible oil is at highest temperature in an oil bath and convection occurs due to decomposition reaction and heat, and taking out the combined product from the edible oil while, in use, the enclosed purifying agent is contacted with the heated edible oil in the oil bath.

(7) The method of purifying degraded edible oil in a temperature range of 150 to 200 °C as defined in above (6), wherein the container includes the non-woven fabric bag and the stainless steel casing, which accommodates the at least one bag, which has many pores, and which is provided with a stainless steel handle.

(8) The method of purifying degraded edible oil in a temperature range of 150 to 200 °C as defined in above (6), wherein the stainless steel casing is a container formed of a stainless steel plate having a number 1000 or more of pores, each having a diameter of 1.5 mm, in a 10 cm square.

(9) The method of purifying degraded edible oil in a temperature range of 150 to 200 °C as defined in above (6), wherein, in use, magnesium oxide is contacted with the edible oil at a rate of 0.8 g to 4.0 g of the magnesium oxide in terms of (MgO) with respect to 1.0 L of the edible oil.

(10) The method of purifying degraded edible oil in a temperature range of 150 to 200 °C as defined in above (6), wherein the edible oil is one or more selected from among soybean oil, olive oil, rapeseed oil, sesame oil, sunflower oil, safflower oil, corn oil, peanut oil, rice oil, and linseed oil.

Advantageous Effects of the Invention

By employing the edible-oil purifying agent of the present invention from the start of use of the edible oil (i.e., from a state of fresh oil), it is possible to purify the edible oil that has degraded with heating after the start of use, and to make the edible oil usable for a longer period. Hitherto, in stores manufacturing fried foods, edible oil having been used for three days is discarded because of exceeding a reference acid value of 2.5. By always keeping the edible-oil purifying agent of the present invention placed in the edible oil in use under heating, a period until exchange with fresh edible oil (i.e., a period until reaching the reference acid value of 2.5) can be prolonged to 15 to 20 days. As a result, the fried foods can be manufactured while the frying oil is maintained in a satisfactory state for a longer period than in the past, and the purchase cost of the edible oil can be reduced about 50 % or more in the stores manufacturing and selling the fried foods. Other advantageous effects are that the fried foods after cooking are more easily deprived of excessive oil and are free from nasty smell, and that the fried foods have satisfactory colors and are finished in better conditions. Moreover, since an amount of the edible oil used is reduced, an amount of waste oil discarded can be reduced and the cost necessary for treating the waste oil can be cut. Furthermore, environments in the field of manufacturing the fried foods are improved in, for example, that the oil is not irritating to the eyes, oily smell is suppressed, and generation of smoke from the high-temperature oil is reduced. In addition, since oxides and free fatty acids attributable to oil are not accumulated in the edible oil, the fried foods having lower calorie and being healthier can be manufactured.

Brief Description of the Drawings

[Fig. 1] Fig. 1 illustrates an inner bag made of copolymerized polyethylene terephthalate and containing magnesium oxide particles.
[Fig. 2] Fig. 2 illustrates a front surface of a stainless steel casing.
[Fig. 3] Fig. 3 illustrates a rear surface of the stainless steel casing.

[Fig. 4] Fig. 4 illustrates the stainless steel casing with the inner bag accommodated in a drawer.
[Fig. 5] Fig. 5 illustrates a state where the used inner bag is taken out from the stainless steel casing.
[Fig. 6] Fig. 6 illustrates the stainless steel casing with two inner bags accommodated in the drawer.

Mode for Carrying out the Invention

The present invention is related to an edible-oil purifying agent made of magnesium oxide particles, and is featured in employing the magnesium oxide particles alone as the edible-oil purifying agent. In other words, the magnesium oxide particles, which are commercially available in grade allowing use in foods, can be employed, as they are, without needing combined use of magnesium oxide with one or more other substances, or needing a process of converting magnesium oxide to a complicated compound or a composition. Moreover, the lifetime of the edible oil when used as frying oil can be prolonged 5 to 7 times the period in the past just by placing the purifying agent of the present invention in a fryer (oil bath) under heating. The purifying agent of the present invention can also be used in combination with other absorbents and so on.

Although edible oils to which the edible-oil purifying agent of the present invention can be applied are not limited to particular types, examples of the applicable edible oil include soybean oil, olive oil, rapeseed oil, sesame oil, sunflower oil, safflower oil, corn oil, peanut oil, rice oil, and linseed oil. The edible-oil purifying agent of the present invention exhibits the edible-oil purifying power in a wide temperature range of 50 to 200 °C, but a better purifying effect can be obtained particularly in a temperature range of 150 to 200 °C. Accordingly, the edible-oil purifying agent of the present invention can exhibit the purifying effect by being placed in the edible oil at high temperature under use in cooking the fried foods, or by being placed into the edible oil at temperature of not lower than 50 °C even after use.

[Degradation of Edible Oil]

Degradation of edible oil progresses as the number of time of manufacturing fried foods in the edible oil increases. While a degree of the degradation differs depending on usages, heating temperatures, types of materials, and states in preservation, the edible oil changes with the progress of the degradation and exhibits such phenomena as turning black, emitting nasty smell, generating bubbles, and giving forth smoke. In such a state, because quality of the manufactured fried foods also degrades, the degraded edible oil has to be exchanged with fresh oil. The degradation of the edible oil is caused with, for example, an increase of free fatty acids in the oil due to hydrolysis of the oil, an increase of low-molecular decomposed matters due to decomposition of peroxides, which is caused due to oxidization of the oil with air, and an increase of polar compounds, acting to increase an acid value of the edible oil, due to polymerization of the peroxides and accumulation of resultant polymers in the oil.

As a result of intensive studies with intent to solve the above-mentioned problems, the inventors have accomplished the present invention by finding that edible oil having degraded with use under heating can be purified by placing magnesium oxide alone into the edible oil during the use under heating, and that fried products can be stably manufactured for a longer period about 5 to 7 times than in the known case of not placing the magnesium oxide into the edible oil. A reference limit value for exchange of the degraded edible oil is an acid value of 2.5, and the degraded edible oil is exchanged with fresh edible oil when the acid value exceeds 2.5.

[Magnesium Oxide]

Although magnesium oxide particles are usually produced by firing magnesium hydroxide particles, the magnesium oxide particles used in the present invention may be produced by any of known methods. The magnesium hydroxide particles can be produced by precipitating magnesium ions in seawater or bittern, as magnesium hydroxide, with alkali. Sources of the alkali are, for example, calcium hydroxide, caustic soda, potassium hydroxide, lithium hydroxide, and ammonia water. Among those examples, caustic soda and calcium hydroxide are preferable. The magnesium hydroxide having been precipitated with the alkali turns to magnesium oxide by being fired at 600 to 1300 °C. The precipitated magnesium hydroxide may be heat-treated at 100 to 120 °C.

Because the magnesium oxide particles in the present invention are used for treatment of foods, they preferably satisfy the standards of food additives in consideration of influences upon human bodies and sanitary hazards. The following is a summary of the standards specified in Japanese Standards of Food Additives (published by Japan Food Additive Association, eighth edition, 2007, pages 371 and 372):

[MgO]

Content: A matter obtained by igniting this substance contains magnesium oxide (MgO) of not less than 96.0 %.
Properties: White or whitey powder or particle.

Confirmation Test: A solution prepared by dissolving 1 g of this substance in 25 mL of hydrochloric acid exhibits the reaction of magnesium salt.
Purity Test: Matters soluble in water: 2.0 % or less

Matters insoluble in hydrochloric acid: 1.0 % or less
Heavy metals: 20 $\mu$g/g or less in terms of Pb
Calcium oxide: 1.5 % or less
Arsenic: 4.0 $\mu$g/g or less in terms of $As_2O_3$
Ignition loss: 10.0 % or less (1000 °C, 30 min)

[Particulate Shape of Magnesium Oxide]

The magnesium oxide particles used in the present invention may have any of forms of powder, fine grains, granules, a tablet, and a porous compacted body, as well as a form adapted for being accommodated in a container, e.g., a bag. From the viewpoint of handling, the magnesium oxide particles themselves are preferably in the form of fine grains or granules. Fine grains or granules of the magnesium oxide can be produced by the known dry granulation method. Because of having good granulation properties, the magnesium oxide can be easily formed into particles or granules without adding a binder. In addition, the resultant particles or granules are avoided from breaking up even under a situation at high temperature, and further kept from coming into powder in the edible oil. The granulation is preferably performed using a dry granulation machine, and the particles or the granules are obtained by pulverizing a compacted sheet-like body into the desired shape.

[Particle Size Distribution]

Although the particle size and the particle size distribution of the magnesium oxide used in the present invention are not limited to particular ones, it is desired that the magnesium oxide particles have larger surface areas, for example, smaller sizes, in order to promote contact of the magnesium oxide particles with impurities generated in the edible oil. In practice, however, the particle size and the particle size distribution are set in consideration of a degree of difficulty in producing and handling the magnesium oxide particles, a separation characteristic from the edible oil, a degree of difficulty in treating the magnesium oxide particles to be not harmful after use, and so on. From the viewpoint of treatment of the edible oil, for example, the particle size distribution of the magnesium oxide fine particles is advantageously set such that a particle size range of 500 to 180 $\mu$m occupies 50 to 95 %, preferably 60 to 90 %, and more preferably 65 to 85 %, and that a particle size range of 180 to 106 $\mu$m occupies 5 to 40 %, preferably 10 to 35 %, and more preferably 15 to 30 %.

Furthermore, the magnesium oxide particles with the particle size range of 500 to 180 $\mu$m occupying 65 to 85 % and the particle size range of 180 to 106 $\mu$m occupying 15 to 30 % are particularly preferable for use as the purifying agent. If the particle size range of 500 to 180 $\mu$m departs from the range of 50 to 95 % and the number of coarse particles increases, purification characteristics would be reduced, thus leading to unsatisfactory results. If the particle size range of 180 to 106 $\mu$m increases outside the range of 5 to 40 %, the magnesium oxide particles would be bulky and fluidity (handling) would be worsened, thus leading to unsatisfactory results. For that reason, the magnesium oxide  particles in the present invention are preferably limited in the two particle size ranges as described above.

The magnesium oxide obtained by firing the magnesium hydroxide is used through the steps of pulverizing, classifying, granulating, and screening. The particle size of the magnesium oxide is controlled by adjusting a mesh size of a screening apparatus.

[Aggregates of Magnesium Oxide Particles]

The magnesium oxide particles in the present invention can be used in the state of fine grains or granules. However, because a large amount of magnesium oxide particles are usually required for treatment of the edible oil in many cases, the magnesium oxide particles are preferably in the form of aggregates in consideration of easiness in handling. Here, the term "aggregates" implies the magnesium oxide particles, for example, in a state where the magnesium oxide particles are contained in a container or a bag, which is made of, e.g., cloth, non-fabric cloth, mesh, porous plastic, and metal, and which has fine pores allowing passage of the edible oil, but not allowing passage of the magnesium oxide particles, or in a state of a compacted body that is obtained by compacting the magnesium oxide particles into the shape of a porous plate or sphere. Thus, operations of placing and taking out the magnesium oxide into and from the edible oil can be facilitated by employing the aggregates of the magnesium oxide particles, which are contained in the container in a not-integrated state, or the aggregates in the form of a porous structure in which the magnesium oxide particles are integrated together.

In order to further facilitate the handling, it is preferable, for example, to contain the magnesium oxide particles in a porous bag, and to accommodate the bag in a rigid container having many pores, e.g., a casing made of stainless steel and having pores through which the bag does not pass. This enables the bag in the casing to be easily exchanged when the purification performance of the magnesium oxide particles has lowered.

[Amount of Magnesium Oxide Particles Used with Respect to Edible Oil]

The edible-oil purifying agent made of the magnesium oxide and contained in a bag made of copolymerized polyethylene terephthalate, according to the present invention, can also develop the purification effect by being placed into the edible oil at the start of use of the edible oil. The purifying agent of the present invention is used in a range of 0.8 to 4.0 g, preferably in a range of 1.0 to 3.5 g, and more preferably in a range of 1.5 to 3.0 g in terms of magnesium oxide (MgO) with respect to 1.0 L of the edible oil. If the amount of the magnesium oxide particles is not more than 0.8 g, the effect of preventing degradation of the edible oil would be insufficient. Even if the magnesium oxide particles are added in excess of 4.0 g, the degradation prevention effect would not be improved any more.

[Aggregates of Magnesium Oxide Particles Contained in Container]

The usage of the magnesium oxide particles of the present invention in the form of aggregates as the edible-oil purifying agent is described in more detail. The magnesium oxide particles are put in the porous bag made of copolymerized polyethylene terephthalate, and the bag is placed into the edible oil at the start of use of the edible oil with heating. Alternatively, the bag made of copolymerized polyethylene terephthalate may be further accommodated in a rigid casing, e.g., a stainless steel casing, and the casing may be placed into the edible oil at the start of use of the edible oil with heating.

By accommodating the bagged magnesium oxide particles in the stainless steel casing, the bag made of copolymerized polyethylene terephthalate and filled with the magnesium oxide particles can be more easily fixed not to be moved in the edible oil. This is advantageous in view of a possibility that, when the bag made of copolymerized polyethylene terephthalate and filled with the magnesium oxide particles is directly placed in the edible oil, the bag may float on the oil surface or may move in the oil, thus impeding the operation of frying foods, and that the magnesium oxide particles may not be fixedly placed at a position where efficiency of treatment of the edible oil is maximized.

The bag made of copolymerized polyethylene terephthalate is a non-woven fabric product having good oil permeability, and the non-woven fabric product can be selected as appropriate from among commercially available ones. However, the bag is required to have characteristics endurable even when used in the edible oil at high temperature for a long time. The bag may have any suitable size insofar as an appropriate amount of the magnesium oxide particles can be put in the bag, and the size of the bag is selected depending on conditions in use.

The size and the shape of the stainless steel container may be set to any suitable ones depending on the size of each bag and the number of bags accommodated in the container. However, the stainless steel container is preferably designed such that the bag to be used, which is made of copolymerized polyethylene terephthalate and which contains the magnesium oxide particles, is closely held in the stainless steel container without leaving free spaces such that the bag will not be moved and dislocated within the container, while satisfactory permeability is ensured with respect to the edible oil. To ensure satisfactory oil permeability, in the case of a stainless steel container, for example, it is preferable to form, in the container, a number 800 or more of pores with diameters of 1.0 to 2.0 mm in a 10 cm square. More preferably, a stainless steel container having a number 1000 or more of pores with a diameter of 1.5 mm is recommended. Thus, such a container using a perforated stainless steel plate is preferably utilized in order to obtain the satisfactory oil permeability. In an example, the magnesium oxide (40 g) contained in one non-woven fabric bag made of copolymerized polyethylene terephthalate is accommodated in a stainless steel container (300 g, 16 cm wide x 8 cm long x 1.5 cm thick), and the one stainless steel container is fixedly placed in soybean oil near a heat source. The weight and the shape of the stainless steel container are important factors in fixedly placing the container in the oil near the heat source.

[Manner of Using Aggregates of Magnesium Oxide Particles Contained in Container]

From the viewpoint of optimally developing the effect of the edible-oil purifying agent made of the magnesium oxide particles, the edible-oil purifying agent is preferably fixedly held in the edible oil near the heat source. The reason is that such arrangement increases frequency at which the edible oil flowing with convection under heating comes into contact with the magnesium oxide particles in the bag made of copolymerized polyethylene terephthalate, and that the edible-oil purifying agent is to be placed at a position where the temperature is maximum and degraded matters of the edible oil are more likely to be generated.

Since the magnesium oxide particles placed in the edible oil absorb polar compounds, the acid value of the edible oil is not increased and discoloration of the edible oil is avoided. Therefore, the lifetime in use of the edible oil is prolonged 5 to 7 times that in the case where the edible oil is used without placing the magnesium oxide particles into the edible oil. The edible oil purified with the purifying agent of the present invention is further advantageous, for example, in that the color of the edible oil does not change, neither smoke nor nasty smell is emanated, and the edible oil is kept in a clean state.

The bag made of copolymerized polyethylene terephthalate and filled with the magnesium oxide particles, and the stainless steel container cause no influences on the magnesium oxide particles and the edible oil, which are contents of the bag and the container. Furthermore, the bag and the container are not broken in the edible oil under heating because of having heat resistance.

The purifying agent of the present invention can also be utilized to purify the degraded edible oil after being used. For example, the used edible oil can be purified by placing the purifying agent of the present invention into the used edible oil while the oil maintains a temperature range of 50 to 200 °C in the fryer, and by leaving the used edible oil to stand under natural cooling.

The features of the present invention will be described in more detail below in connection with Examples and Comparative Examples, but the present invention is not limited to the following Examples.

In Examples, tests for measuring the acid value and polar compounds were performed in conformity with Japanese Standards of Food Additives.

(a) Measurement of Acid Value

An analyte solution was prepared by precisely weighing 10 g of a sample, adding the sample to 50 ml of an ethanol/diethylether mixture (1 : 1), and by heating, when required, the solution for dissolution of the sample. After cooling, an acid value was measured by adding several droplets of a phenolphthalein reagent to the analyte solution and carrying out titration using a 0.1 mol/L potassium hydroxide ethanolic solution until a red color lasting for 30 sec appeared. It is was here assumed that, to the solvent used, the 0.1 mol/L potassium hydroxide ethanolic solution had been previously added before the use until a red color lasting for 30 sec had appeared with the phenolphthalein reagent being an indicator.

The acid value was calculated in accordance with the following formula.

$$\text{Acid value} = (\text{consumption (mL) of the 0.1 mol/L potassium hydroxide ethanolic solution} \times 5.611) / \text{amount of sampled sample (g)}$$

(b) Measurement of Polar Compounds

Polar oxides were measured using a digital food-adapted tester testo0270 made by testo AG. The tester used here was of electrostatic capacitance type and was able to measure an amount of polar compounds in an oil temperature range of 40 to 180 °C.

(c) Measurement of Particle Size Distribution

The particle size distribution was measured by the ro-tap method using IIDA SIEVE SHAKER made by IIDA SEISAKUSHO. More specifically, 100 g of a sample was put in each of designated test sieves (850, 500, 355, 180, 106, and 75 $\mu$m), and respective weights of the particles having passed through the sieve and the remaining particles were measured after shaking for 10 min.

Example 1

40 g of magnesium oxide particles (with the particle size range of 500 to 180 $\mu$m occupying 77.0 % and the particle size range of 180 to 106 $\mu$m occupying 22.4 %), in grade equivalent to a food additive, were put in a bag made of copolymerized polyethylene terephthalate and having a rectangular shape of 7.7 x 12 cm, and was then sealed. On the other hand, a vessel filled with 18 L of unused soybean oil was prepared, and the magnesium oxide (40 g) contained in one non-woven fabric bag made of copolymerized polyethylene terephthalate was accommodated in one stainless steel container (300 g, 16 cm wide x 8 cm long x 1.5 cm thick). The one stainless steel container including the bag was fixedly placed in the soybean oil near a heat source.

Potato pieces for fried potato were continuously fried for 10 hours per day while the soybean oil was heated and was kept at temperature of 170 °C at all times. At the seventh day, the bag containing the purifying agent was taken out from the soybean oil and was exchanged with another one new bag. The same operation as that described above was then continued. After the end of the frying operation, the acid value of the soybean oil and the amount of polar compounds were measured everyday, and purified conditions of the oil was checked. After using the soybean oil, the cooled soybean oil was preserved until next use, while the soybean oil was kept in the fryer (oil bath). In other words, the magnesium oxide particles contained in the stainless steel container were fixedly held in the soybean oil at all times during the test. The test was carried out three times as Test Examples 1, 2 and 3. The case of not adding the magnesium oxide was also tested as Comparative Example. The test results are illustrated in Tables 1 and 2.

[Table 1]

| Acid Value of Edible Oil | | | | | | | | | | | | | | | | | | | | |
|---|---|---|---|---|---|---|---|---|---|---|---|---|---|---|---|---|---|---|---|---|
| Number of Lapsed Days | 1 | 2 | 3 | 4 | 5 | 6 | 7 | 8 | 9 | 10 | 11 | 12 | 13 | 14 | 15 | 16 | 17 | 18 | 19 | (A) |
| Test Example 1 | 0 | 0 | 0 | 0 | 0 | 0.5 | 0.5 | 0.5 | 0.5 | 1 | 1 | 1 | 1 | 1 | 2 | | | | | ○ |
| Test Example 2 | 0 | 0 | 0.5 | 0 | 0.5 | 0.5 | 0.5 | 0.5 | 0.5 | 0.5 | 1 | 1.5 | 2 | | | | | | | ○ |
| Test Example 3 | 0 | 0 | 0 | 0 | 0 | 0 | 0 | 0.5 | 0.5 | 0.5 | 0.5 | 0.5 | 1 | 1.5 | 1 | 1.5 | 1.5 | 1.5 | 1.5 | ○ |
| Comparative Example | 0 | 1 | 2 | | | | | | | | | | | | | | | | | x |
| (A) Bubbles ○: not generated △: generated in small quantity x: generated | | | | | | | | | | | | | | | | | | | | |

[Table 2]

| Amount of Polar Compounds | | | | | | | | | | | | | | | | | | | |
|---|---|---|---|---|---|---|---|---|---|---|---|---|---|---|---|---|---|---|---|
| Number of Lapsed Days | 1 | 2 | 3 | 4 | 5 | 6 | 7 | 8 | 9 | 10 | 11 | 12 | 13 | 14 | 15 | 16 | 17 | 18 | 19 |
| Test Example 1 | 0 | 1 | 2.3 | 2.6 | 3.5 | 4 | 5.5 | 5.8 | 6 | 7 | 8 | 9.5 | 9.5 | 10 | 13 | | | | |
| Test Example 2 | 0 | 2 | 3 | 7 | 1 | 8.5 | 8 | 9.5 | 10 | 11 | 16 | 13 | 14 | | | | | | |
| Test Example 3 | 3 | 4 | 5 | 8 | 6 | 6 | 5 | 8.5 | 10 | 8 | 8 | 7.5 | 8 | 8 | 9 | 9 | 10 | 10 | 11 |
| Comparative Example | 0 | 4 | 7 | 14 | | | | | | | | | | | | | | | |

When the acid value of the edible oil exceeds 2.5, the relevant edible oil is unacceptable as frying oil. In view of such a point, as a result of continuing the test until the acid value exceeded 2, the acid value exceeded the limit value in the third day in Comparative Example. In contrast, it was confirmed in Test Examples that, though varying to some extent, quality of the edible oil was kept in a satisfactory state for 15 days in Test Example 1, 13 days in Test Example 2, and more than 19 days in Test Example 3. Moreover, in Test Examples, bubbles were not generated and the edible oil was kept in a satisfactory state during the test periods.

When the amount of polar compounds generated in edible oil exceeds 14, the relevant edible oil is unacceptable in practical use as frying oil. In view of such a point, the test was continued until the amount of the polar compounds reached a value near 14. In Comparative Example, the amount of the polar compounds exceeded the limit value at the fourth day. In contrast, it did not exceed the limit value even after 15 days in Test Example 1, exceeded the limit value at 13-th day in Test Example 2, and did not exceed the limit value even after 19 days in Test Example 3. Thus, the tested oil could be used as the frying oil for a long period.

Example 2

In Example 2, a purification test of rapeseed oil was performed in a similar manner to that in Example 1. The test results are illustrated in Table 3. The acid value of the edible oil reaches the limit value of 2.5 at 15-th day, and the amount of the polar compounds takes a value of 11 and does not reach the limit value even after the lapse of 16 days. It is hence apparent that the edible-oil purifying agent of the present invention is effective for rapeseed oil as well.

[Table 3]

| Number of Lapsed Days | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Test Example 4 | | | | | | | | | | | | | | | | |
| Acid Value of Edible Oil | 0 | 1 | 1 | 1 | 1 | 1.5 | 1 | 1 | 1 | 1.5 | 1.5 | 2 | 2 | 2 | 2.5 | |
| Amount of Polar Compounds | 0 | 1 | 2 | 2.5 | 4 | 4 | 4.5 | 5.5 | 6 | 6.5 | 8 | 8 | 9 | 9.5 | 10 | 11 |

Example 3

A degradation test of soybean oil was performed under the same conditions as in Example 1 except for using porous magnesium oxide instead of magnesium oxide. The porous magnesium oxide was produced as follows. Magnesium oxide particles with the particle size range of 500 to 180 μm occupying 82.0 % and the particle size range of 180 to 106 μm occupying 17.5 % were pressed under pressure of 10 MPa by employing a press machine (BRIQETTING PRESS BRE-32 made by Maekawa Testing MFG Co., Ltd.), whereby a compacted body having a plate-like shape was obtained. The compacted body was fired at 1200 °C for 4 hours, whereby a porous compacted body was obtained. The porous compacted body was pulverized, screened, and granulated, whereby porous magnesium oxide with the particle size range of 500 to 180 μm occupying 79.0 % and the particle size range of 180 to 106 μm occupying 20.1 % was obtained.

With that test, similar results to those in Example 1 were obtained. Thus, it was confirmed that, according to the present invention, manufacturing of fried foods could be continued for a period 5 to 7 times longer than in Comparative Example.

Example 4

In Example 4, tests were performed in actual fifteen stores. Although scales of oil tanks are different depending on the stores, a rate of the magnesium oxide particles with respect to the edible oil in use was set to the same rate as in Example 1, i.e., 40g of the magnesium oxide particles with respect to 18 L of the soybean oil, so that test conditions were kept same. The soybean oil was exchanged in a usual manner of discarding the soybean oil before quality of the manufactured fried foods degraded. The tests were continued for one month, and the fried foods were manufactured while the magnesium oxide particles were exchanged per seven days. An amount of waste oil discarded for one month in each store was calculated. On the other hand, as Comparative Example not employing the magnesium oxide particles, an amount of waste oil discarded in each of the fifteen stores in the same month one year ago was surveyed. Table 4 illustrates respective amounts of waste oil discarded in stores A to O in comparison between an example (October in 2010) in which the magnesium oxide particles of the present invention are employed and an example (October in 2009) in which the magnesium oxide particles are not employed.

[Table 4]

| Store | October in 2010 | October in 2009 |
|-------|-----------------|-----------------|
| | Amount of Discarded Waste Oil kg | Amount of Discarded Waste Oil kg |
| A | 111 | 778 |
| B | 111 | 222 |
| C | 0 | 111 |
| D | 167 | 333 |
| E | 0 | 667 |
| F | 178 | 311 |
| G | 111 | 300 |
| H | 0 | 278 |
| I | 89 | 222 |
| J | 167 | 611 |
| K | 111 | 278 |
| L | 167 | 833 |
| M | 111 | 222 |
| N | 56 | 178 |
| O | 111 | 333 |
| Total | 1490 | 5677 |

As seen from Table 4, the amount of the waste oil discarded in each store was greatly reduced by employing the magnesium oxide particles. The total amount of the discarded waste oil was 1490 Kg in the case of practicing the present invention, while the total amount of the discarded waste oil was 5677 Kg in the same month one year ago. Thus, the total amount of the discarded waste oil in all the stores was reduced to about 26 %. Among the stores tested, the purchase cost of the soybean oil was maximally reduced about 85 % in the store A. Even in the store M where a cost reduction was minimal, the purchase cost of the soybean oil was reduced about 50 %.

Example 5

In Example 5, the purification test of rapeseed oil was performed in a similar manner to that in Example 1 to examine the number of operated days during which the purifying agent of the present invention was usable. As seen from Table 5 illustrating the test result, it was found that the acid value exceeded the limit value of 2.5 after the lapse of 9 days. It was hence confirmed that the edible oil was continuously usable for 9 days after the start of use without exchanging the purifying agent.

[Table 5]

| Number of Lapsed Days | 1 | 2 | 3 | 4 | 5 | 6 | 7 | 8 | 9 | 10 |
|-----------------------|---|---|---|---|---|---|---|---|---|----|
| Test Example 5 | | | | | | | | | | |
| Acid Value | 0 | 1 | 1 | 1 | 1 | 1 | 1.5 | 2 | 2 | 3 |

Example 6

In Example 6, tests were performed in in a similar manner to that in Example 1 by employing two types of magnesium oxide particles having different particle size distributions. Table 6 illustrates the test results. MgO A had the particle size distribution with the particle size range of 500 to 180 μm occupying 86.3 % and the particle size range of 180 to 106 μm occupying 13.5 %, and MgO B had the particle size distribution with the particle size range of 500 to 180 μm occupying 64.0 % and the particle size range of 180 to 106 μm occupying 34.6 %. It is apparent from Table 6 that both the types of magnesium oxide particles exhibit good purification actions even after the lapse of 15 days from the start of use.

[Table 6]

| Acid Value | | | | | | | | | | | | | | | |
|---|---|---|---|---|---|---|---|---|---|---|---|---|---|---|---|
| Number of Lapsed Days | 1 | 2 | 3 | 4 | 5 | 6 | 7 | 8 | 9 | 10 | 11 | 12 | 13 | 14 | 15 |
| MgO A | 0 | 0 | 0 | 0 | 0 | 0 | 0 | 0.5 | 0.5 | 0.5 | 0.5 | 0.5 | 1 | 1.5 | 1 |
| MgO B | 0 | 0 | 0 | 0 | 0 | 0.5 | 0.5 | 0.5 | 0.5 | 1 | | 1 | 11 | 1 | 2 |
| Amount of Polar Compounds | | | | | | | | | | | | | | | |
| Number of Lapsed Days | 1 | 2 | 3 | 4 | 5 | 6 | 7 | 8 | 9 | 10 | 11 | 12 | 13 | 14 | 15 |
| MgO A | 3 | 4 | 5 | 8 | 6 | 6 | 5 | 8.5 | 10 | 8 | 8 | 7.5 | 8 | 8 | 9 |
| MgO B | 0 | 1 | 2.3 | 2.6 | 3.5 | 4 | 5.5 | 58 | 6 | 7 | 8 | 9.5 | 9.5 | 10 | 13 |

Example 7

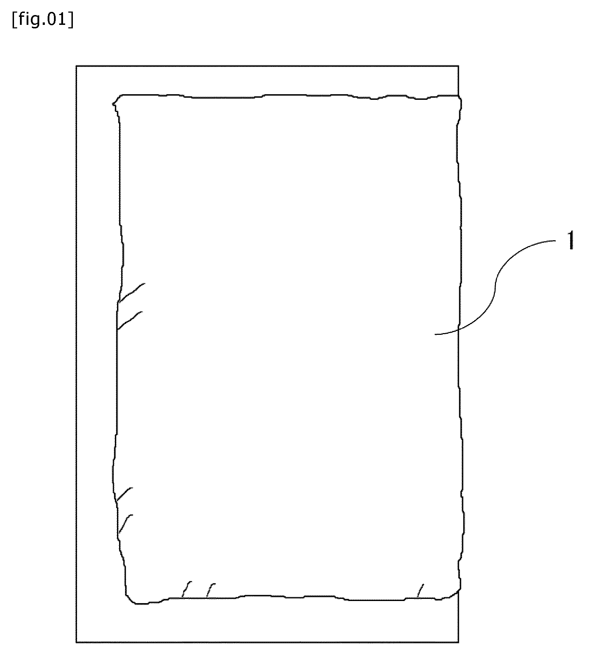

In Example 7, a concrete example of practical use of the magnesium oxide powder of the present invention is described with reference to the drawings. Fig. 1 illustrates a state where 40 g of the magnesium oxide particles are contained in an inner bag 1 (7.7 x 12 cm) made of copolymerized ethylene terephthalate non-woven cloth. The magnesium oxide particles are enclosed in the inner bag 1. If the magnesium oxide particles are left to stand in air, they tend to absorb moisture and to gradually degenerate. To prevent the degeneration, the magnesium oxide particles are sealed in an outer bag made of, e.g., a plastic not allowing passage of water vapor therethrough. The method of use and the remarks on use may be printed on the surface of the outer bag. For example, the remarks say that magnesium oxide is in itself not a substance adversely affecting the health, but a due care is to be paid because the purifying agent made of the magnesium oxide is used at high temperature.

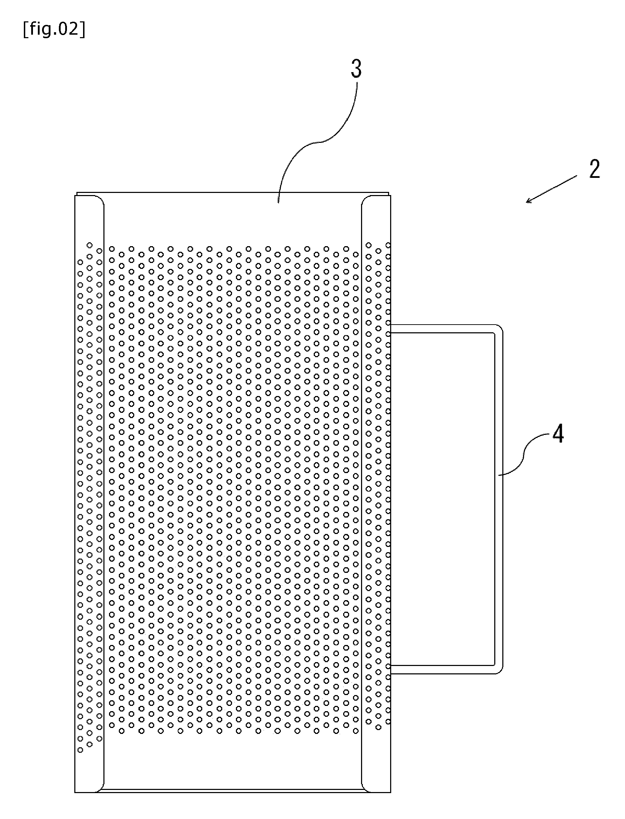

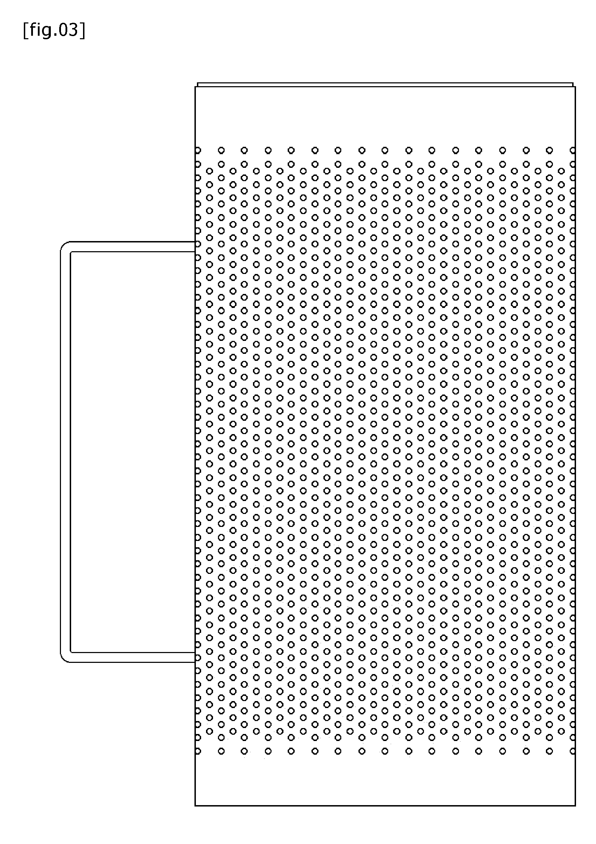

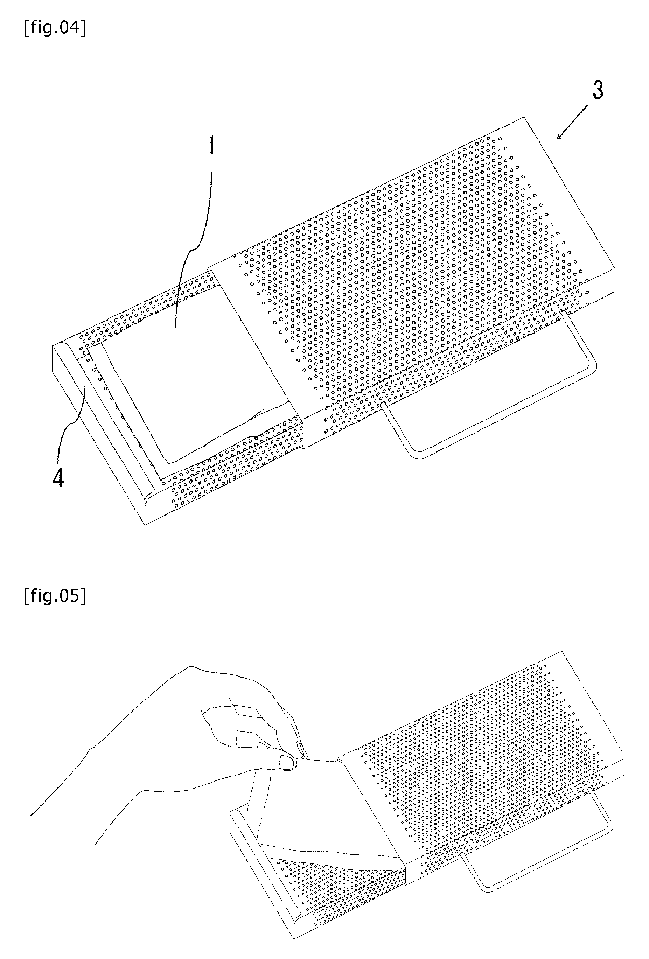

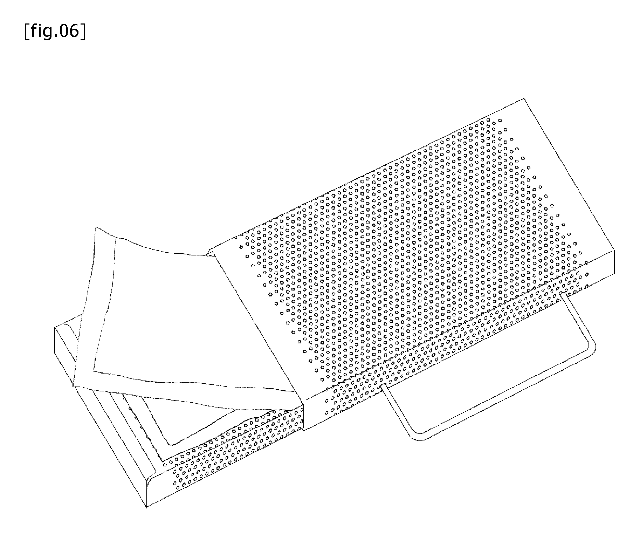

The inner bag 1 is taken out from the outer bag when used, and it is accommodated in a casing 2, illustrated in Figs. 2 and 3, formed of a perforated stainless steel plate. The casing 2 has fine pores formed over its entire surface such that a number 1500 of pores, each having a diameter of 1.5 mm, are present in a 10 cm square. The casing 2 includes a drawer 3 to facilitate operations of putting and taking out the inner bag 1 containing the magnesium oxide particles into and from the casing 2. The drawer 3 also has fine pores. The casing 2 is provided with a stainless steel handle 4. The handle 4 facilitates fixing of the casing 2 to a predetermined position and carrying of the casing. Fig. 2 illustrates a front surface of the casing, and Fig. 3 illustrates a rear surface of the casing. Fig. 4 illustrates a state where the inner bag 1 is accommodated in the drawer 3 of the casing 2. After closing the drawer 3, the casing is placed into edible oil before heating and is fixedly held. After use in the heated edible oil for about 7 days, the inner bag is taken out from the casing 2 and then discarded (Fig. 5). As illustrated in Fig. 6, two inner bags may be accommodated in the casing 2.

A position where the casing is fixedly placed in the edible oil is not limited to particular one, but the fixed position is preferably set to a location where the edible oil flows most dynamically. For example, a maximum effect is obtained by placing the casing at a position adjacent to a heater where the edible oil is at the highest temperature and convection occurs due to the decomposition reaction and heat.

Industrial Applicability

According to the present invention, as described above, impurities generated in edible oil used at high temperature, such as oxides, can be efficiently removed to purify the edible oil while fried foods are cooked continuously, and the number of times of repeated use of the edible oil can be greatly increased. Moreover, since the treated edible oil is held in a state sufficiently satisfying quality of the fried foods in terms of taste, color, and smell, the lifetime of the edible oil can be prolonged not only in homes, but also in stores and factories in which a large amount of edible oil is used. In addition, since the amount of the discarded oil can be greatly reduced, the edible-oil purifying agent of the present invention contributes to cutting the costs of the fried foods and reducing some of the causes of environmental pollution.

List of Reference Symbols

1:  inner bag containing magnesium oxide
2:  casing
3:  drawer
4:  handle

**Claims**

1.  A combined product comprising an edible-oil purifying agent and a container for enclosing the purifying agent and used in a state of the edible-oil purifying agent being enclosed in the container, wherein the purifying agent is made of magnesium oxide particles that are in an aggregate form and that are in grade equivalent to a food additive, and the container includes a non-woven fabric bag and a stainless steel casing, the non-woven fabric bag being made of a material having heat resistance, oil resistance, and oil permeability and allowing the container to be placed at a position adjacent to a heater where edible oil is at highest temperature in an oil bath and convection occurs due to decomposition reaction and heat, the stainless steel casing accommodating the at least one bag and having many pores, the combined product being used by being placed into and taken out from the edible oil in the oil bath while, in use, the enclosed purifying agent is contacted with the heated edible oil in the oil bath.

2.  The combined product of the edible-oil purifying agent and the container for enclosing the purifying agent according to Claim 1, wherein the container includes the non-woven fabric bag and the stainless steel casing, which accommodates the at least one bag, which has many pores, and which is provided with a stainless steel handle.

3.  The combined product of the edible-oil purifying agent and the container for enclosing the purifying agent according to Claim 1, wherein the stainless steel casing is a container formed of a stainless steel plate having a number 1000 or more of pores, each having a diameter of 1.5 mm, in a 10 cm square.

4.  The combined product of the edible-oil purifying agent and the container for enclosing the purifying agent according to Claim 1, wherein, in use, magnesium oxide is contacted with the edible oil at a rate of 0.8 g to 4.0 g of the magnesium oxide in terms of (MgO) with respect to 1.0 L of the edible oil.

5.  The combined product of the edible-oil purifying agent and the container for enclosing the purifying agent according to Claim 1, wherein the edible oil is one or more selected from among soybean oil, olive oil, rapeseed oil, sesame oil, sunflower oil, safflower oil, corn oil, peanut oil, rice oil, and linseed oil.

6.  A method of purifying degraded edible oil in a temperature range of 150 to 200 °C, the method being practiced using a combined product, which comprises an edible-oil purifying agent made of magnesium oxide particles that are in an aggregate form and that are in grade equivalent to a food additive, and a container for enclosing the purifying agent, the container including a non-woven fabric bag made of a material having oil resistance and oil permeability, and a stainless steel casing, which accommodates the at least one bag, which is made of a material having heat resistance, and which has many pores, the method including the step of placing the combined product, which is in a state of the purifying agent being enclosed in the container, at a position adjacent to a heater where the edible oil is at highest temperature in an oil bath and convection occurs due to decomposition reaction and heat, and taking out the combined product from the edible oil while, in use, the enclosed purifying agent is contacted with the heated edible oil in the oil bath.

7. The method of purifying degraded edible oil in a temperature range of 150 to 200 °C according to Claim 6, wherein the container includes the non-woven fabric bag and the stainless steel casing, which accommodates the at least one bag, which has many pores, and which is provided with a stainless steel handle.

8. The method of purifying degraded edible oil in a temperature range of 150 to 200 °C according to Claim 6, wherein the stainless steel casing is a container formed of a stainless steel plate having a number 1000 or more of pores, each having a diameter of 1.5 mm, in a 10 cm square.

9. The method of purifying degraded oil in a temperature range of 150 to 200 °C according to Claim 6, wherein, in use, magnesium oxide is contacted with the edible oil at a rate of 0.8 g to 4.0 g of the magnesium oxide in terms of (MgO) with respect to 1.0 L of the edible oil.

10. The method of purifying degraded oil in a temperature range of 150 to 200 °C according to Claim 6, wherein the edible oil is one or more selected from among soybean oil, olive oil, rapeseed oil, sesame oil, sunflower oil, safflower oil, corn oil, peanut oil, rice oil, and linseed oil.

[fig.01]

[fig.02]

[fig.03]

[fig.04]

[fig.05]

[fig.06]

## INTERNATIONAL SEARCH REPORT

| | International application No. |
|---|---|
| | PCT/JP2012/055063 |

**A. CLASSIFICATION OF SUBJECT MATTER**

*C11B3/10*(2006.01)i, *A23D9/04*(2006.01)i, *A23L1/015*(2006.01)i, *A23L3/3463* (2006.01)i, *B01J20/04*(2006.01)i, *C01F5/00*(2006.01)i, *C11B5/00*(2006.01)i, *C11B13/00*(2006.01)i

According to International Patent Classification (IPC) or to both national classification and IPC

**B. FIELDS SEARCHED**

Minimum documentation searched (classification system followed by classification symbols)
C11B3/10, C11B5/00, C11B13/00, A23D7/00-9/06, A23L1/00-1/035, A23L3/3463, A47J37/10-37/12, B01J20/00-20/34, C01F5/00

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)
JSTPlus/JST7580(JDreamII)

**C. DOCUMENTS CONSIDERED TO BE RELEVANT**

| Category* | Citation of document, with indication, where appropriate, of the relevant passages | Relevant to claim No. |
|---|---|---|
| Y | JP 2001-342488 A (Nippon Kankyo Engineering Kabushiki Kaisha), 14 December 2001 (14.12.2001), claims; paragraphs [0003] to [0013], [0019] to [0022], [0026] to [0035], [0038] to [0041]; fig. 1, 2 (Family: none) | 1-10 |
| Y | Microfilm of the specification and drawings annexed to the request of Japanese Utility Model Application No. 164595/1982(Laid-open No. 70732/1984) (Toyo Element Industry Co., Ltd.), 14 May 1984 (14.05.1984), claims; page 1, line 9 to page 4, the last line; fig. 1 to 3 (Family: none) | 1-10 |

☒ Further documents are listed in the continuation of Box C.　　☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 May, 2012 (10.05.12) | 22 May, 2012 (22.05.12) |

| Name and mailing address of the ISA/ Japanese Patent Office | Authorized officer |
|---|---|
| Facsimile No. | Telephone No. |

Form PCT/ISA/210 (second sheet) (July 2009)

23

**INTERNATIONAL SEARCH REPORT**

| International application No. |
|---|
| PCT/JP2012/055063 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 3144555 U  (Yugen Kaisha Anto),<br>04 September 2008 (04.09.2008),<br>claims; paragraphs [0004] to [0029]; fig. 1 to 5<br>(Family: none) | 1-10 |
| Y | JP 1-124355 A  (Kabushiki Kaisha Hasu),<br>17 May 1989 (17.05.1989),<br>claims; page 2, upper left column, line 2 to page 3, upper left column, the last line; fig. 1<br>(Family: none) | 1-10 |
| Y | JP 2-307526 A  (Matsushita Electric Industrial Co., Ltd.),<br>20 December 1990 (20.12.1990),<br>claims; page 2, upper left column, line 8 to page 3, lower left column, the last line<br>(Family: none) | 1-10 |
| Y | JP 59-129297 A  (Matsushita Electric Industrial Co., Ltd.),<br>25 July 1984 (25.07.1984),<br>claims; page 1, lower right column, line 11 to page 4, upper right column, the last line; fig. 1 to 4<br>(Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H2307526 B
- JP 2001335793 A
- JP 2006241245 A

- JP 2007143525 A
- JP 2006334221 A

**Non-patent literature cited in the description**

- Japanese Standards of Food Additives. Japan Food Additive Association, 2007, 371, 372

- BRIQETTING PRESS BRE-32. Maekawa Testing MFG Co., Ltd